# EUROPEAN PATENT SPECIFICATION

(11) **EP 0 206 781 B1**
(45) Date of publication and mention of the grant of the patent: **24.03.1993**
(21) Application number: 86304760.1
(22) Date of filing: 20.06.1986
(51) Int. Cl.: H01H 50/14, H01H 51/06, H01M 2/30

(54) **Electromagnetic switch for use in a vehicleand a vehicle battery**
Elektromagnetischer Schalter zur Anwendung in einem Wagenund Batterie eines Wagens
Commutateur électromagnétique pour utilisation dans une voitureet batterie de voiture

(30) Priority: 20.06.1985 JP 135166/85; 17.10.1985 JP 232111/85
(43) Date of publication of application: 30.12.1986
(73) Proprietor: HONDA GIKEN KOGYO KABUSHIKI KAISHA, Minato-ku Tokyo 107 (JP); HONDA LOCK MANUFACTURING CO., LTD., Sadowaracho Miyazaki-gun Miyazaki-ken (JP)
(72) Inventor: Kudo, Masayuki, Shiki-shi Saitama (JP); Miura, Nobuo, Wako-shi Saitama (JP); Nakatake, Yoshiteru, Miyazaki-gun Miyazaki (JP)
(74) Representative: Leale, Robin George

(56) References cited:
- FR-A- 2 380 629
- FR-E- 48 565
- GB-A- 618 214
- US-A- 4 293 835

## Description

This invention relates to an electromagnetic switch for use in a vehicle and a vehicle battery, particularly but not exclusively for use in a motorcycle, and particularly adapted to energise a starter motor circuit.

In a motorcycle of the type whose engine is started by means of a self-starter, a starter electromagnetic switch is usually arranged to be operated by means of a starter button mounted on a handle-bar to cause the self-starter to be electrically connected with a battery to start the engine.

Conventionally, the said electromagnetic switch is mounted by itself in a suitable position by way of a vibration preventing member so as to be free from interference from parts of the engine which may vibrate in use; for example the switch may be located between a carburetor and an air cleaner, or at the back of the air cleaner. However, it is difficult to find a location for the said switch which provides a sufficient space which is not encroached upon by the various engine parts. Furthermore, engine parts such as the air cleaner may be required to change their size or arrangement upon a design change, for example, but this can be difficult when the space for locating and wiring the starter switch has still to be provided.

Viewed from one aspect the present invention provides an electromagnetic switch for energising a starter motor circuit of a vehicle engine and a vehicle battery, said vehicle battery having a battery casing and two terminals, a recess being formed in an upper portion of the casing of said battery, between said battery terminals, and said electromagnetic switch having a switch casing, formed with first and second ends, two switch terminals, at least one solenoid, and an electrical terminal for connection of said switch to a starter motor circuit, wherein said electromagnetic switch is received in said recess, a partition formed integrally with said battery casing being interposed between said electromagnetic switch and each of the terminals of said battery, and in that a first switch terminal projects from one end of said switch casing and is secured directly to a first terminal of said battery, a mounting member projecting from the second end of said switch casing and being connected in an insulating manner to a second terminal of said battery to support said switch.

In one form of the invention the switch includes an electrically conductive switch member having an elongate movable portion carrying a movable contact of the switch, and at least one solenoid arranged to act on said movable switch member to move the same laterally to make the switch contacts, a fixed end portion of said movable switch member projecting out of the switch casing and constituting the said first electrical terminal of the switch.

Preferably the said movable contact-carrying portion and the said fixed end portion of the said switch member are offset from each other in parallel planes.

In a preferred form the said switch casing comprises an inner case and an outer case, the inner case being formed as two split parts having said fixed end portion of the movable switch member and said mounting member clamped between them, and the outer case comprising a synthetic resin moulding covering the said inner case.

Preferably respective sealing members surround said fixed end portion of the movable switch member and said mounting member where they are clamped between said inner case parts.

In another form of the invention the switch includes two fixed contacts arranged to be electrically interconnected by a movable contact member carried by a plunger upon energisation of a magnetizable coil acting on said plunger, a first one of said fixed contacts being electrically connected to said first electrical terminal of the switch, the second fixed contact being connected to said further electrical terminal thereof, and the switch having a third electrical terminal branching off between said first electrical terminal and said first fixed contact for connection to a load circuit of a vehicle.

Two embodiments of the invention will now be described by way of example and with reference to the accompanying drawings, in which:-
Fig. 1 is an exploded perspective view showing the top part of a battery and an associated electromagnetic switch according to a first embodiment of the invention;
Fig. 2 is a vertical cross-section view showing the switch mounted on the battery;
Fig. 3 is a further cross-section on the line III-III of Fig. 2;
Fig. 4 is a view similar to Fig. 2 but showing a second embodiment of an electromagnetic switch according to the invention;
Fig. 5 is an underneath plan view of the switch of Fig. 4; and
Fig. 6 is an exploded perspective view of certain parts of the switch of Figs. 4 and 5.

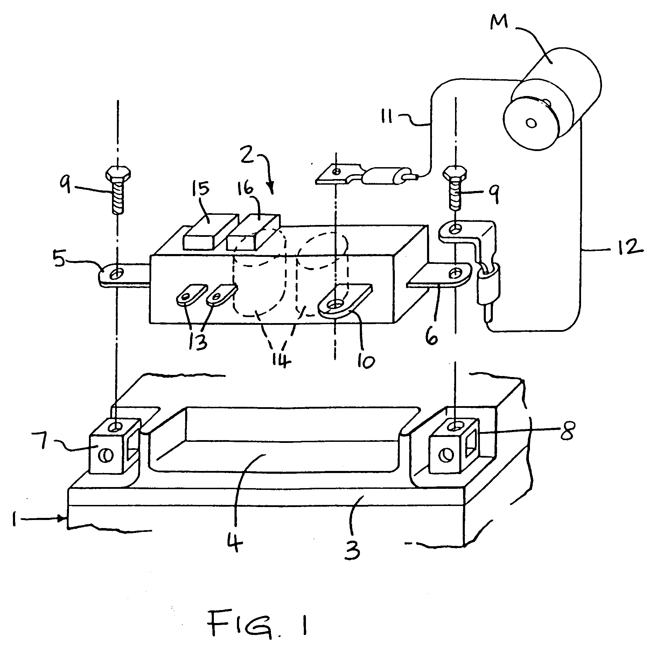

Referring first to the embodiment of Figs. 1 to 3, reference numeral 1 denotes a battery to be mounted on a vehicle such as a motorcycle, and numeral 2 denotes an electromagnetic switch for energising the starter motor circuit, which will be referred to as the starter motor switch.

A cover 3 of the battery casing is formed in its top side with a recess 4 in which the starter motor switch 2 is fitted. From the respective ends of the switch 2 there extend a terminal 5 and a mounting member 6 which are fixed to battery terminals 7 and 8 by means of bolts 9 to secure the switch 2 to the battery 1.

Thus the positive terminal 5 of the starter motor switch 2 is electrically connected directly to the positive terminal or anode 7 of the battery 1 when it is fixed thereto. On the other hand the mounting member 6 of the switch is a metallic member which is supported by but insulated from the switch casing so that it does not constitute an electrical terminal. In other words the member 6 is a dummy terminal performing only the function of securing the switch 2 in position.

A negative terminal 10 of the switch 2 projects from the side of the switch at a right angle with respect to the mounting member 6. To the terminal 10 is connected one end of a lead 11 which has its other end connected to one terminal of a starter motor M.

To the negative terminal 8 of the battery 1 is secured a lead 12, the other end of which is connected to the other terminal of the starter motor M. Denoted by numeral 13 are two terminals which project from the switch 2 and have their inner ends electrically connected with two solenoids 14 mounted in the switch 2 and their outer ends electrically connected to a starter button through suitable leads (not shown). The numeral 15 denotes a fuse inserted in the main circuit, and 16 denotes a spare fuse.

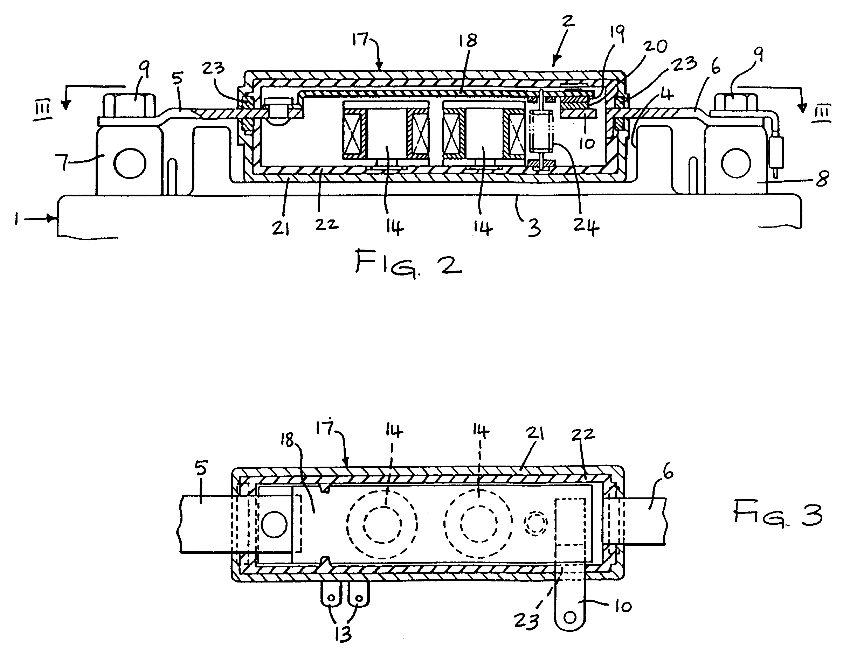

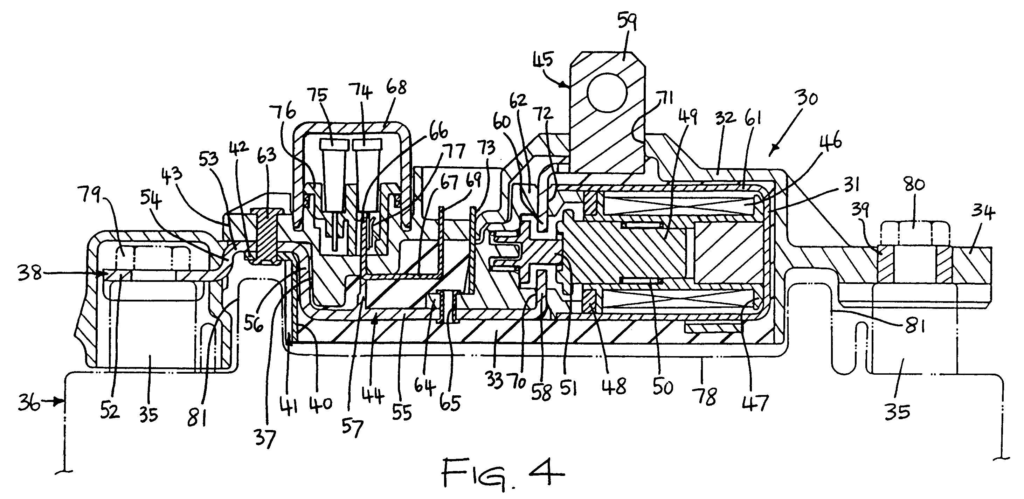

As better seen from Figs. 2 and 3, the main elements of the switch 2 comprise a casing 17; the aforementioned solenoids 14 (the number of which may be more or less than two) which are mounted on a bottom plate of the casing 17; an electrically conductive switch member in the form of a movable arm 18 which is made of a magnetic material and is rivetted to the inner end of the positive terminal 5 such that it is attracted laterally, i.e. downward, by the solenoids 14 when these solenoids are energised and is returned to its upper position by its own resilience when the solenoids are deenergised; a movable contact 19 of the switch which is fixed on the lower side of the leading end of the arm 18; and a fixed contact 20 of the switch which is mounted on the terminal 10 to face the movable contact 19. It should be noted that the terminal 5 of the switch forms a fixed end portion of the movable switch member 18, which fixed terminal 5 and movable member 18 are offset from each other in parallel planes.

The casing 17 of the switch comprises a double structure in the form of an outer case 21 and an inner case 22, the inner case being formed of two split halves. At each of the portions of the casing 17 through which the terminals 5, 10 and 13 and the mounting member 6 extend, there is sandwiched between the split halves of the inner case 22, and the outer case 21, a sealing member 23 by which foreign particles such as water droplets or dust are prevented from entering the casing 17. Indicated at 24 is a tension spring which acts to assist the downward attraction of the arm 18 by the solenoids 14 and to hold the contacts 19 and 20 in their closed position while the solenoids are energised.

Alternatively member 24 may be a compression spring which normally holds the contact 19 on the arm 18 away from the contact 20 but allows the contacts to close when the solenoids 14 are energised.

The operations of the apparatus of Figs. 1 to 3 is as follows.

To start the engine a main switch (not shown) is turned on, and the starter button is then actuated to energise the solenoids 14 in the switch 2. In response to this energisation of the solenoids, the arm 18 is attracted downward to the position shown by solid lines in Fig. 2, to close the contacts 19 and 20 so that the starter motor becomes electrically connected to the battery 1 to start the engine. As soon as the engine is running and the starter button is released the solenoids 14 are deenergised to open the contacts 19 and 20 to interrupt the power supply to the starter motor.

As the battery casing is formed with the aforementioned recess 4 in which the starter motor switch 2 is fitted, it is unnecessary to provide any special space for locating the starter motor switch 2 in addition to the space for locating the battery. As a result, the space available for locating other engine parts is accordingly widened, to facilitate the layout of such parts.

Moreover, since the switch 2 is secured directly to the battery 1, measures for preventing vibration of the battery will equally prevent vibration of the switch. This can reduce the number of vibration-preventing parts, as compared with the counter-measures previously taken for exclusively preventing vibration of the starter switch.

Furthermore, since the positive terminal 5 of the switch 2 is fastened directly to the positive terminal 7 of the battery 1 by means of a bolt 9, voltage drop can be reduced as compared with prior art in which the respective terminals were connected by electrical leads. At the same time the number of the electric contacts are reduced, and problems caused by entanglement of such leads are removed.

Incidentally, the recess 4 for receiving the switch 2 need not always be formed in the battery cover 3, but may be formed in another part of the battery casing.

Referring now to the second embodiment of the invention illustrated in Figs. 4 to 6, reference numeral 30 denotes an electromagnetic switch which includes a body portion 31 housed in a casing 32. The body 31 is sealed in the casing 32 by filling the inside of the casing with an epoxy resin 33.

The casing 32 is made of a heat-resistant resin material such as polybutylene terephthalate (PBT) and is formed in a rectangular shape with an open bottom. The casing is formed at one end with a mounting member 34, which projects generally horizontally outwardly therefrom for mounting on and securing to a cathode terminal 35 of a battery 36, and at its other end is formed with an opening 37 from the upper end of which an electrical terminal 38 projects generally horizontally outwardly. A metal reinforcing ring 39 is fixed centrally in the mounting member 34. The opening 37 is closed by a vertical portion 40 of a cover member 41 of inverted L-shaped section. The cover member 41 has its horizontal portion 42 positioned at a pre-determined spacing below the underside of a projection 43 of the casing 2.

The body 31 of the switch houses the following main parts: a first fixed contact member 44 which is electrically connected with the battery 36 by way of the terminal 38; a second fixed contact member 45 which is electrically connected with the starter motor circuit; a magnetizable coil 46 which is made by winding a coil on a bobbin 47 having a yoke 48 attached thereto; a plunger 49 which is slidably fitted in the coil 46 and is biased in an opening (leftward) direction by the action of a return spring 50; and a movable contact member 51 which is movable with the plunger 49 to electrically connect or disconnect the two fixed contact members 44 and 45.

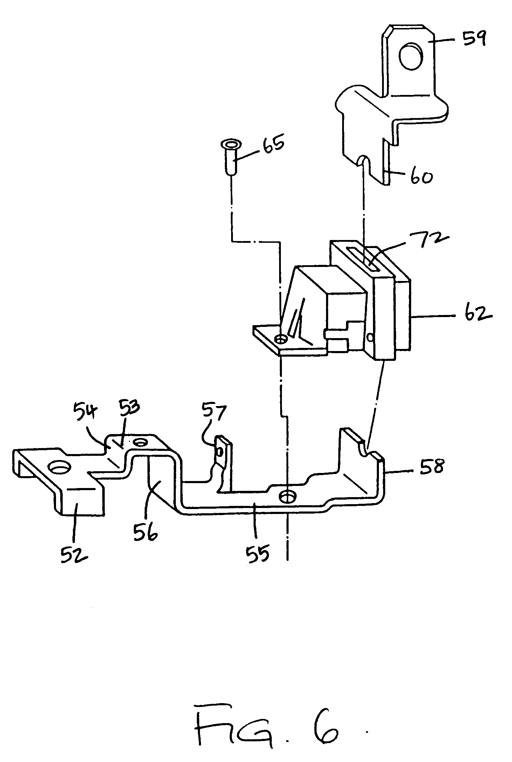

The first fixed contact member 44 is made by bending a slender conductive metal plate as shown in Fig. 6, and comprises: a generally horizontal first connecting portion 52 forming the terminal 38 at one longitudinal end; a generally horizontal mounting wall 53 joined to said first connecting portion 52 by a generally vertical wall 54; a generally horizontal mounting wall 55 joined to said mounting wall 53 by a generally vertical wall 56; a second connecting terminal 57 which extends generally vertically upward and is positioned substantially centrally of said mounting wall 55 and at a generally widthwise middle portion of the same; and a fixed contact 58 which extends generally vertically upward from the end portion of the mounting wall 55.

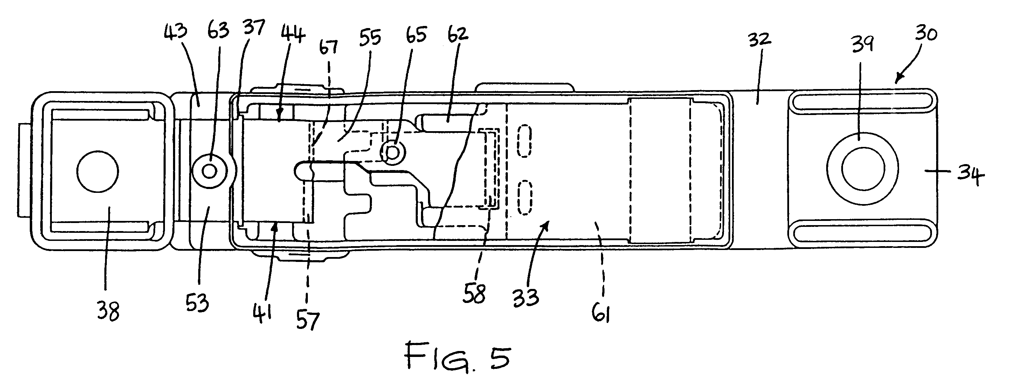

The second fixed contact member 45 is also made by bending a conductive metal plate, as shown in Fig. 5, and comprises: a second connecting terminal 59 which extends vertically upward from one end thereof; and a fixed contact 60 which extends vertically downward from the other end in a manner merging with the terminal 59.

The aforesaid magnetizable coil 46, plunger 49 and movable contact member 51 are arranged in the casing 32 in a region closer to one end thereof and they are assembled and mounted in a space which is defined by a cup-shaped cylindrical case 61 and a cover 62 fixed firmly in the open end of the case 61.

The first fixed contact member 44 has its first connecting terminal 52 projecting outwardly from one end of the casing 32 and its first mounting wall 53 clamped between the projection 43 of the casing 32 and the horizontal portion 42 of the cover member 41, all of these parts being fixed by means of a rivet 63. The vertical wall 56, mounting wall 55, connecting terminal 57 and fixed contact 58 are positioned inside of the casing 32 and are fixed by extending the lower side of the cover 62 as a projection 64 along the upper side of the mounting wall 55 closer to the fixed contact 57 and fitting a grommet 65 in the projection 64.

The second connecting terminal 57 of the fixed contact member 44 is electrically connected to one end 66 of an electric load terminal 67 of the vehicle through a later-described fuse device, and the other end 69 of the load terminal 67 projects outwardly and upwardly from the casing 32. The fixed contact 58 extends through cover 62 by way of a hole 70 in the same.

The second fixed contact member 45 is mounted in the casing 32 above the said case 61 and has its connecting terminal 59 projecting outwardly through a hole 71 of the casing 32 for connection with a connecting terminal (not shown) of a starter motor circuit. The fixed contact 60 is inserted through the cover 62 by way of a hole 72 in the same and is located at a predetermined spacing from the first fixed contact 58. The fixed contacts 58 and 60 are electrically connectible by way of the movable contact member 51. More specifically, the contact member 51 is attracted together with the plunger 49 toward the mounting member 34 (i.e. to the right in Fig. 1) when the switch is turned on (i.e. closed) so that the member 51 abuts against the fixed contacts 58 and 60 to electrically interconnect them.

The terminal of the magnetizable coil 46 is connected through a connecting pin (not shown) with two coil terminals 73 (of which only one is shown) which have their upper ends projecting outwardly of the upper side of the casing 32. The projecting end of one such coil terminal 73 is connected with the starter motor circuit through a electrical lead (not shown) while the projecting end of the other coil terminal 73 is connected with the load circuit of the main switch through a lead and the starter button (neither of these elements being shown).

The aforementioned fuse device includes a cover 68 enclosing two blade fuses 74 and 75, which are fitted and held in a fuse guide 76 formed on the top of the casing 32, the fuse 74 having its connecting terminal 77 electrically connected to the end 66 of the load terminal 67. The other end 69 of the load terminal is connectible to the load circuit of a vehicle through a lead and the main switch (neither of which are shown).

The electromagnetic switch 30 is securely mounted on the top of the battery 36 by fitting the casing 32 in a recess 78 formed in the top surface of the battery, by fitting the respective holes of the terminal 38 and mounting member 34 on the terminal posts 35 of the battery and by fastening the terminal 38 and the member 34 to the terminal posts by means of bolts 79 and 80. In this condition, the terminal 38 is electrically connected to the anode of the battery 36. On the other hand, the reinforcing member 39 is electrically insulated from the casing 32 so that it does not provide any electrical contact.

The manner of operation of the electromagnetic switch 30 thus constructed will now be described.

When the engine is to be started, the main switch is turned on, and the starter button is then actuated to magnetize the coil 46 of the electro-magnetic switch 30. This causes the plunger 49 to be attracted into the bobbin 47 against the biasing force of the return spring 50, and thus the movable contact member 51 is brought into abutment with the fixed contacts 58 and 60 so that these fixed contacts are electrically connected to turn on the switch. As a result, the starter motor circuit is closed to energise the starter motor.

When the starter button is released after the engine has started, the coil 46 is demagnetized so that the movable contact member 51 disengages from the fixed contacts 58 and 60 to interrupt the power supply to the starter motor.

As the switch 30 is located in the recess 78 formed in the battery 36, there is no need to provide any special space for mounting the switch, so that the space available for locating other engine accessory parts is accordingly widened to facilitate the layout of such parts.

Moreover, as the switch terminal 38 and the mounting member 34 are fastened to the battery terminal posts 35 by means of the bolts 79 and 80, respectively, as has been described hereinbefore, the electromagnetic switch 30 is fixed in position without the provision of any special fixing means such as a bracket.

Furthermore the fact that the terminal 38 of the electromagnetic switch 30 is connected directly to the anode terminal of the battery makes any corresponding electrical lead unnecessary. Moreover, the mounting member 34 is fixedly fastened to the cathode terminal of the battery so that no special fastening means is required, and the casing 32 is firmly fixed to the battery.

It should also be noted that various other electrical devices may be located in a recess in the casing of a battery according to the invention, rather than a starter switch. It is also a feature of the invention, as illustrated in Fig. 4, that a partition 81, integral with the battery casing, is located between any such electrical device and the battery terminals.

## Claims

1. An electromagnetic switch (2) for energising a starter motor circuit of a vehicle engine and a vehicle battery (1), said vehicle battery (1) having a battery casing and two terminals (7,8), a recess (4) being formed in an upper portion of the casing of said battery (1), between said battery terminals, and said electromagnetic switch (2) having a switch casing (17), formed with first and second ends, two switch terminals (5,13), at least one solenoid (14), and an electrical terminal (10) for connection of said switch to a starter motor circuit, wherein said electromagnetic switch is received in said recess (4), a partition (81) formed integrally with said battery casing being interposed between said electromagnetic switch and each of the terminals (7,8) of said battery (1), and in that a first switch terminal (5) projects from one end of said switch casing (17) and is secured directly to a first terminal (7) of said battery (1), a mounting member (6) projecting from the second end of said switch casing (17) and being connected in an insulating manner to a second terminal (8) of said battery (1) to support said switch.

2. A switch and battery as claimed in claim 1, wherein said switch includes an electrically conductive switch member having an elongate movable portion (18) carrying a movable contact (19) of the switch, and said at least one solenoid (14) is arranged to act on said movable switch member to move the same laterally to make the switch contacts, a fixed end portion (5) of said movable switch member projecting out of the switch casing (17) and constituting the said first electrical terminal of the switch.

3. A switch and battery as claimed in claim 2, wherein the said movable contact-carrying portion (18) and the said fixed end portion (5) of the said switch member are offset from each other in parallel planes.

4. A switch and battery as claimed in claim 2 or 3, wherein the said switch casing comprises an inner case (22) and an outer case (21), the inner case being formed as two split parts having said fixed end portion (5) of the movable switch member and said mounting member (6) clamped between them, and the outer case comprising a synthetic resin moulding covering the said inner case.

5. A switch and battery as claimed in claim 4, wherein respective sealing members (23) surround said fixed end portion (5) of the movable switch member and said mounting member (6) where they are clamped between said inner case parts.

6. A switch and battery as claimed in claim 1, wherein said switch includes two fixed contacts (44,45) arranged to be electrically interconnected by a movable contact member (51) carried by a plunger (49) upon energisation of a magnetizable coil (46) acting on said plunger, a first one (44) of said fixed contacts being electrically connected to said first electrical terminal (38) of the switch, the second fixed contact (45) being connected to said further electrical terminal (59) thereof, and the switch having a third electrical terminal (57) branching off between said first electrical terminal and said first fixed contact for connection to a load circuit of a vehicle.

7. A switch and battery as claimed in any of the preceding claims, wherein the said first electrical terminal of the switch is directly secured to the anode terminal of the battery, and the said mounting member of the switch is directly secured to the cathode terminal thereof.

## Patentansprüche

1. Elektromagnetischer Schalter (2) zum Erregen eines Anlassermotorschaltkreises eines Fahrzeugmotors und Fahrzeugbatterie (1),
wobei die Fahrzeugbatterie (1) ein Batteriegehäuse und zwei Anschlüsse (7,8) aufweist, in einem oberen Abschnitt des Gehäuses der Batterie (1) zwischen den Batterieanschlüssen eine Ausnehmung (4) gebildet ist und der elektromagnetische Schalter (2) ein mit ersten und zweiten Enden gebildetes Schaltergehäuse (17), zwei Schalteranschlüsse (5,13), wenigstens ein Solenoid (14) und einen elektrischen Anschluß (10) zum Verbinden des Schalters mit einem Anlassermotorschaltkreis aufweist,
wobei der elektromagnetische Schalter in der Ausnehmung (4) aufgenommen ist, eine mit dem Batteriegehäuse integral gebildete Trennwandung (81) zwischen dem elektromagnetischen Schalter und jedem der Anschlüsse (7,8) der Batterie (1) angeordnet ist und daß ein erster Schalteranschluß (5) von einem Ende des Schaltergehäuses (17) vorsteht und direkt an einem ersten Anschluß (7) der Batterie (1) gesichert ist, und
wobei ein Befestigungsteil (6) von dem zweiten Ende des Schaltergehäuses (17) vorsteht und an einem zweiten Anschluß (8) der Batterie (1) isoliert angeschlossen ist, um den Schalter zu halten.

2. Schalter und Batterie nach Anspruch 1, worin der Schalter ein elektrisch leitendes Schalterteil aufweist mit einem länglichen beweglichen Abschnitt (18), der einen beweglichen Kontakt (19) des Schalters trägt, und worin wenigstens ein Solenoid (14) zum Wirken auf das bewegliche Schalterteil angeordnet ist, um dieses zur Kontaktschaltung seitlich zu bewegen, wobei ein fester Endabschnitt (15) des beweglichen Schalterteiles aus dem Schaltergehäuse (17) vorsteht und den ersten elektrischen Anschluß des Schalters bildet.

3. Schalter und Batterie nach Anspruch 2, worin der bewegliche kontakttragende Abschnitt (18) und der feste Endabschnitt (5) des Schalterteils in parallelen Ebenen voneinander versetzt angeordnet sind.

4. Schalter und Batterie nach Anspruch 2 oder 3, worin das Schaltergehäuse ein Innengehäuse (22) und ein Außengehäuse (21) umfaßt, wobei das Innengehäuse aus zwei separaten Teilen gebildet ist, die den festen Endabschnitt (5) des beweglichen Schalterteils und das Befestigungsteil (6) zwischen sich einklemmen, und wobei das Außengehäuse ein das Innengehäuse bedeckendes Kunstharzformteil aufweist.

5. Schalter und Batterie nach Anspruch 4, worin jeweilige Dichtelemente (23) den festen Endabschnitt (5) des beweglichen Schalterteils und das Befestigungsteil (6) dort umgeben, wo sie zwischen den Innengehäuseteilen eingeklemmt sind.

6. Schalter und Batterie nach Anspruch 1, worin der Schalter zwei feste Kontakte (44,45) aufweist, angeordnet zur elektrischen Verbindung über ein von einem Kolben (49) getragenes bewegliches Kontaktteil (51) durch Erregung einer auf den Kolben wirkenden magnetisierbaren Spule (46), wobei ein erster (44) der festen Kontakte mit dem ersten elektrischen Anschluß (38) des Schalters verbunden ist, der zweite feste Kontakt (45) mit dessen anderem elektrischen Anschluß (59) verbunden ist und wobei der Schalter einen dritten elektrischen Anschluß (57) aufweist, der zwischen dem ersten elektrischen Anschluß und dem ersten festen Kontakt zum Anschluß an einen Lastschaltkreis des Fahrzeugs abzweigt.

7. Schalter und Batterie nach einem der vorhergehenden Ansprüche, worin der erste elektrische Anschluß des Schalters direkt an dem Anodenanschluß der Batterie und das Befestigungsteil des Schalters direkt an deren Kathodenanschluß befestigt ist.

## Revendications

1. Commutateur électromagnétique destiné à rendre actif un circuit de moteur de démarrage d'un moteur de véhicule et batterie (1) de véhicule, ladite batterie (1) de véhicule ayant un boîtier de batterie et deux bornes (7,8), une cavité (4) étant formée dans une partie supérieure du boîtier de ladite batterie (1) entre lesdites bornes de batterie, et ledit commutateur électromagnétique ayant un boîtier (17) de commutateur formé avec une première et une seconde extrémités, deux bornes (5,13) de commutateur, au moins un électroaimant (14), et une borne électrique (10) pour la connexion dudit commutateur au circuit d'un moteur de démarrage, caractérisés en ce que ledit commutateur électromagnétique est reçu dans ladite cavité (4), une cloison (81) de séparation venue de matière avec ledit boîtier de batterie étant interposée entre ledit commutateur électromagnétique et chacune des bornes (7, 8) de ladite batterie (1), et en ce qu'une première borne (5) de commutateur fait saillie à partir d'une extrémité dudit boîtier (17) de commutateur et est fixée directement sur une première borne (7) de ladite batterie (1), un élément de montage (6) faisant saillie à partir de la seconde extrémité dudit boîtier (17) de commutateur étant connecté de manière isolante sur une seconde borne (8) de ladite batterie (1) pour supporter ledit commutateur.

2. Commutateur et batterie selon la revendication 1, dans lesquels ledit commutateur comporte un élément formant commutateur conducteur de l'électricité, ayant une partie (18) mobile allongée portant un contact mobile (19) du commutateur, et ledit au moins un électroaimant (14) est agencé pour agir sur ledit élément mobile formant commutateur pour déplacer celui-ci latéralement pour établir les contacts du commutateur, une partie (5) d'extrémité fixe dudit élément mobile formant commutateur faisant saillie à l'extérieur du boîtier (17) de commutateur et constituant ladite première borne électrique du commutateur.

3. Commutateur et batterie selon la revendication 2, dans lesquels ladite partie mobile (18) supportant un contact et ladite partie (5) d'extrémité fixe dudit élément formant commutateur sont décalées l'une par rapport à l'autre dans des plans parallèles.

4. Commutateur et batterie selon la revendication 2 ou 3, dans lesquels ledit boîtier de commutateur comporte une enveloppe intérieure (22) et une enveloppe extérieure (21), l'enveloppe intérieure étant formée en deux parties séparées serrant entre elles ladite partie (5) d'extrémité fixe de l'élément mobile formant commutateur et ledit élément (6) de montage, et l'enveloppe extérieure étant constituée d'un moulage de résine synthétique recouvrant ladite enveloppe intérieure.

5. Commutateur et batterie selon la revendication 4, dans lesquels des éléments (23) d'étanchéité respectifs entourent ladite partie (5) d'extrémité fixe de l'élément mobile formant commutateur et ledit élément (6) de montage à l'endroit où ils sont serrés entre lesdites parties d'enveloppe intérieure.

6. Commutateur et batterie selon la revendication 1, dans lesquels ledit commutateur comporte deux contacts fixes (44, 45) agencés pour être reliés électriquement à l'aide d'un élément mobile (51) de contact supporté par un piston (49) lors de la mise sous tension d'une bobine magnétisable (46) agissant sur ledit piston, un premier (44) desdits contacts fixes étant connecté électriquement à ladite première borne électrique (38) du commutateur, le second contact fixe (45) étant connecté à ladite autre borne électrique (59) de celui-ci, et le commutateur ayant une troisième borne électrique (57) ramifiée située entre ladite première borne électrique et ledit premier contact fixe, destinée à être connectée au circuit de charge d'un véhicule.

7. Commutateur et batterie selon l'une quelconque des revendications précédentes, dans lesquels ladite première borne électrique du commutateur est directement fixée à la borne formant anode de la batterie et ledit élément de montage du commutateur est fixé directement sur la borne formant cathode de celle-ci.
